# FASCICULE DE BREVET EUROPEEN

(11) **EP 3 130 215 B1**
(45) Date de publication et mention de la délivrance du brevet: **14.08.2019**
(21) Numéro de dépôt: 16183495.7
(22) Date de dépôt: 10.08.2016
(51) Int. Cl.: A01D 45/26

(54) **PROCÉDÉ DE CULTURE ET DE RÉCOLTE DE PLANTES HERBACÉES**
ANBAU- UND ERNTEVERFAHREN VON GRASARTIGEN PFLANZEN
METHOD FOR CULTIVATING AND HARVESTING HERBACEOUS PLANTS

(30) Priorité: 11.08.2015 FR 1557666
(43) Date de publication de la demande: 15.02.2017
(73) Titulaire: BONDUELLE, 59173 Renescure (FR)
(72) Inventeur: VAILLOT, Rémy, 59173 RENESCURE (FR); LARTIGUE, Guillaume, 59173 RENESCURE (FR); GILBERT, Emmanuel, 59173 RENESCURE (FR)
(74) Mandataire: Bureau Duthoit Legros Associés

(56) Documents cités:
- EP-A1- 0 202 179
- DE-A1-102010 006 506
- FR-A1- 2 446 056
- FR-A1- 2 695 000
- US-A- 5 964 081

## Description

L'invention est relative à un procédé de culture et de récolte de plantes herbacées, du genre *Valerianella,* permettant l'obtention de feuilles de plantes herbacées du genre *Valerianella,* libres, c'est-à-dire, non liées entre elles à la base par leur collet.

Le domaine de l'invention est celui des produits agricoles et préparations crus, prêts à l'emploi, et plus particulièrement des salades prêtes à l'emploi. En France, cette classe de produits est communément appelée produits de quatrième gamme.

Le consommateur connaît ainsi des sachets de salades prêtes à l'emploi, c'est-à-dire déjà lavées et rincées, et typiquement maintenues sous atmosphère protectrice afin de réduire dans le temps les phénomènes d'oxydation.

Parmi les salades concernées, l'invention concerne plus particulièrement la *Valerianella,* encore connue sous le nom de « *mâche* » en français, ou encore « *cornsalad* » en anglais que le consommateur connaît uniquement emballée sous forme de bouquets, c'est-à-dire les feuilles étant liées entre elles à leur base par leur collet.

La mâche des préparations prêtes à l'emploi de l'état de la technique est classiquement cultivée en planches, c'est-à-dire sur des bandes de terre, parfaitement planes, bordées par des passe-pieds le long desquels circulent les roues des machines de travail, et en particulier les roues du tracteur qui enjambent la planche.

Selon l'expérience de la Demanderesse, la mâche est cultivée selon cette technique avec une densité du semi comprise entre 850 plantes/m² et 1000 plantes/m². Le cycle de culture dépend de la saison. Il est bien souvent, à titre indicatif, de 32 à 35 jours en été et jusqu'à de l'ordre de 85 jours en hiver. La mâche est récoltée lorsque la hauteur de bouquet est suffisante, à savoir une hauteur de bouquet comprise entre 4 cm et 7 cm.

Afin d'augmenter le rendement, la récolte de la mâche cultivée sur planches est réalisée de manière mécanisée, au moyen d'une machine de récolte typiquement remorquée par un tracteur ou encore autoportée: le document FR 2 695 000 enseigne une telle machine utilisée pour la récolte de la mâche, voire d'autres plantes herbacées.

Cette machine est remorquée par un tracteur et assure la récolte des plantes herbacées lors de l'avance de la machine le long de la planche. Cette machine de récolte comprend un moyen de coupe, en l'occurrence une lame de coupe, sensiblement transversale et perpendiculaire à la direction de la planche, classiquement animée d'un mouvement alternatif suivant son axe longitudinal.

La hauteur de coupe du moyen de coupe est réglée dans l'objectif de couper les plantes herbacées au niveau de leur collet, dont la hauteur est faible. Selon l'expérience de la Demanderesse, et dans le cas de la récolte de la mâche la lame de coupe est enfouie sous les premiers millimètres de sable de la planche de culture, et tel que représenté à la figure 1 du document FR 2 695 000.

Lors de l'avance de la machine, la lame vient couper les plantes de mâche au niveau du collet, récoltant ainsi des bouquets de mâches, à savoir des feuilles de mâche liées entre elles à leur base, ces bouquets de mâches étant ensuite relevés par un convoyeur de la machine, et collectés dans une caisse de stockage, encore connue sous le nom de palox.

Dans la culture de mâche classique, ces caisses sont transportées le plus rapidement possible dans des systèmes de mise au froid. La mâche traverse ensuite des bacs de lavage, et dans le but d'éliminer un maximum de sable. Les bouquets passent ensuite sur divers tapis dans le but d'enlever l'eau résiduelle, puis passe encore devant un trieur optique dans le but d'enlever les différents corps étrangers. Ces bouquets sont ensuite conditionnés sous caisse et stockés au froid, avant expédition dans une usine d'emballage de conditionnement qui se trouve bien souvent à distance du site de culture.

Selon les constatations des inventeurs, ces opérations de désablage, opérées directement à proximité du site de culture, avant expédition de la mâche vers l'usine de conditionnement, créent un stress sur les feuilles, à l'origine de feuilles abimées, et donc d'une perte de rendement.

L'invention est née de la volonté de la Demanderesse de proposer au consommateur des produits prêts à l'emploi, et pour la première fois, de la mâche à feuilles libres, c'est-à-dire non liées en elles à leur base.

Le but de la présente invention est de proposer un procédé de culture et de récolte de plantes herbacées, de genre *Valerianella,* économiquement rentable, permettant de parvenir à cet objectif.

Un autre but de la présente invention est de proposer, au moins selon un mode de réalisation, un tel procédé susceptible de diminuer au maximum les pertes de culture.

Un autre but de la présente invention est de proposer un sachet de feuilles de plantes herbacées du genre *Valerianella,* libres, seules ou en mélange avec d'autres plantes herbacées et/ou des crudités.

D'autres buts et avantages de la description apparaîtront au cours de la description qui va suivre qui n'est donnée qu'à titre indicatif et qui n'a pas pour but de la limiter.

L'invention concerne un procédé de culture et de récolte de plantes herbacées, de genre *Valerianella,* autrement dit de mâche dans lequel :
- on cultive les plantes herbacées du genre *Valerianella* en planches,
- on récolte les plantes herbacées de manière mécanisée, au moyen d'une machine présentant un moyen de coupe assurant la coupe des plantes lors de l'avance de la machine le long de la planche, et on règle la hauteur de coupe au-dessus du collet des plantes herbacées et de telle façon à couper les plantes herbacées, au niveau du pétiole, et de manière à obtenir des feuilles libres, c'est-à-dire, non liées entre elles par leur collet.

Selon des caractéristiques optionnelles de l'invention, prises seules ou en combinaison :
- on récolte les plantes du genre *Valerianella* lorsque la longueur des pétioles des plantes est comprise entre 2 cm et 3 cm ;
- on règle la hauteur de la coupe entre 2 cm et 3 cm au-dessus du sol ;
- on récolte les plantes du genre *Valerianella* lorsque la hauteur des bouquets est comprise entre 10 cm et 12 cm ;
- la densité du semi de culture est comprise entre 1100 plantes/m² et 1300 plantes/m².

Selon un mode de réalisation, le procédé comprend les étapes suivantes, après récolte :
- on lave les feuilles libres dans des bacs de lavage,
- on emballe lesdites feuilles libres de genre sous sachet.

De préférence, on réalise l'étape d'emballage des feuilles libres sous atmosphère protectrice appauvrie en oxygène.

Selon un mode de réalisation avantageux, lesdites étapes de culture et de récolte étant mises en oeuvre sur un site de culture, lesdites étapes de lavage et d'emballage dans une usine de conditionnement, distante du site de culture, on procède à l'expédition des feuilles récoltées depuis le site de culture et jusqu'à ladite usine de conditionnement, lesdites feuilles expédiées n'ayant pas subie d'étape de lavage.

Les feuilles libres peuvent être conditionnées sous sachet, seules, obtenant ainsi un mono-produit de feuilles libres de plantes de genre *Valerianella,* ou encore en mélange avec une ou plusieurs autres plantes herbacées et/ou avec une ou plusieurs crudités et/ou des herbes aromatiques, obtenant ainsi un multi-produit.

De préférence, les produits sont conditionnés dans le sachet sous atmosphère protectrice appauvrie en oxygène.

Selon un mode de réalisation, le sachet est mono-produit, contenant lesdites feuilles de plantes herbacées du genre *Valerianella,* libres.

Selon une alternative de réalisation, le sachet est multi-produits, contenant lesdites feuilles de plantes herbacées du genre *Valerianella* en mélange avec d'autres plantes herbacées et/ou avec une ou plusieurs crudités et/ou des herbes aromatiques.

La ou lesdites autres plantes herbacées en mélange peuvent être choisies parmi :
- chicurium endivia, en particulier l'endive, la scarole ou la frisée,
- Eruca sativa (Roquette),
- Lactuca (Laitue).

La ou les crudités peuvent être choisies parmi :
- la carotte râpée,
- la betterave rouge (racine).

La ou les herbes aromatiques peuvent être choisies parmi, le basilic, le cerfeuil, la ciboulette, la coriandre, l'estragon, le persil, ou encore les jeunes feuilles de betterave rouge (en anglais « *red chard* »).

L'invention concerne encore l' utilisation du sachet de feuilles de plantes herbacées du genre *Valerianella* conforme à l'invention, en particulier obtenu selon le procédé selon l'invention, comme sachet de salade, seule, ou en mélange, prête à l'emploi.

L'invention sera mieux comprise à la lecture de la description suivante accompagnée des dessins en annexe parmi lesquels :
- La figure 1 illustre schématiquement la récolte de la mâche telle que cultivée selon l'état de la technique, de manière mécanisée, au moyen d'une machine de récolte tractée ou autoportée,
- La figure 2 est une vue de détail d'un bouquet de mâche de la figure 1,
- La figure 3 illustre la récolte de la mâche telle que cultivée selon un mode de réalisation de l'invention,
- La figure 4 est une vue de détail d'un bouquet de mâche de la figure 3, réagissant à un étiolement forcé, provoqué par la densité du semi.

Aussi, l'invention concerne un procédé de culture et de récolte de plantes herbacées, de genre *Valerianella,* encore connue sous le nom de mâche en français ou « *cornsalad* » en anglais.

Selon le procédé conforme à l'invention :
- on cultive les plantes herbacées du genre *Valerianella* en planches,
- on récolte les plantes de manière mécanisée, au moyen d'une machine présentant un moyen de coupe assurant la coupe des plantes lors de l'avance de la machine le long de la planche, et on règle la hauteur de coupe au-dessus du collet des plantes herbacées et de telle façon à couper les plantes herbacées, au niveau du pétiole, et de manière à obtenir des feuilles libres, c'est-à-dire, non liées entre elles par leur collet.

Le mode de culture est celui d'une culture des plantes en planches, c'est-à-dire des bandes de terre, planes, bordées de chaque côté par des chemins, en décaissé où circule les roues des tracteurs qui enjambent la planche.

La culture de la mâche telle que connue de l'état de la technique est aujourd'hui cultivée en planches, avec une densité du semi comprise entre 850 plantes/m² et 1000 plantes/m². Le cycle de culture dépend de la saison, bien souvent, à titre indicatif, de 32 à 35 jours en été et jusqu'à de l'ordre de 85 jours en hiver. La mâche est récoltée lorsque la hauteur de bouquet est suffisante, à savoir une hauteur de bouquet comprise entre 4 cm et 7 cm, et bien souvent entre 4 cm et 5 cm.

La récolte s'effectue au moyen d'une machine de récolte, connue en tant que telle de l'état de la technique, typiquement tractée et dont le document FR 2 695 000 en divulgue un exemple. Une telle machine comprend un châssis 1, en appui sur la planche de culture, classiquement au moyen de rouleaux ou de patins régulateurs, et un moyen de coupe 3, en l'occurrence une lame de coupe, de hauteur réglable par rapport au châssis 1. Cette lame de coupe est animée d'un mouvement alternatif suivant son axe, afin de faciliter la coupe. La lame de coupe est sensiblement transversale et perpendiculaire à l'axe longitudinal de la planche de culture, et permet de récolter les plantes lorsque la machine avance le long de la planche.

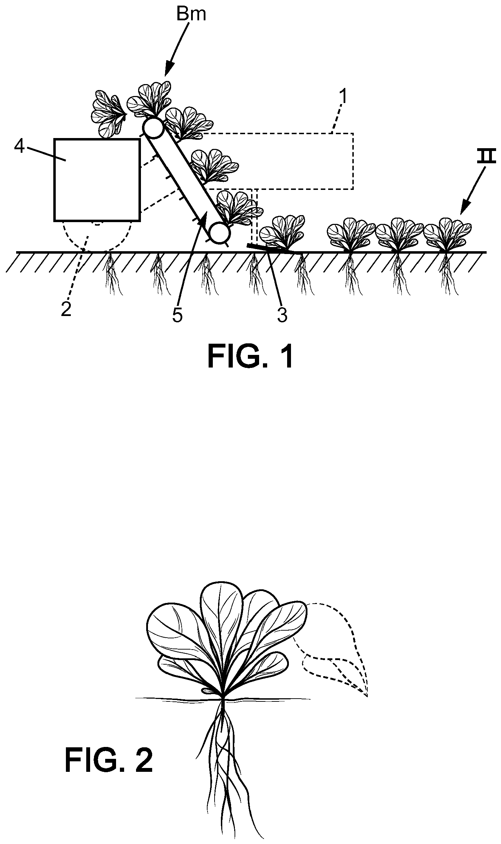

Pour la mâche telle que cultivée selon l'état de la technique, la hauteur du moyen de coupe 3, utilisée pour la récolte est réglée de sorte à qu'elle soit enfouie sous les premiers millimètres de la planche de culture, et comme représenté à la figure 1. Cette hauteur de coupe permet de couper les plantes herbacées au niveau de leur collet, obtenant ainsi des bouquets de mâches Bm, à savoir des feuilles liées entre elles à leur base. Ces bouquets sont ensuite transportés par un convoyeur 5 jusqu'à une caisse de stockage 4, embarquée sur la machine de récolte.

Le procédé selon l'invention diffère fondamentalement de celui de l'état de la technique en ce qu'on règle la hauteur de coupe hc en dessus du collet des plantes herbacées V et de telle façon à couper les plantes herbacées, au niveau du pétiole, c'est-à-dire la pièce foliaire entre le collet et la limbe de la feuille.

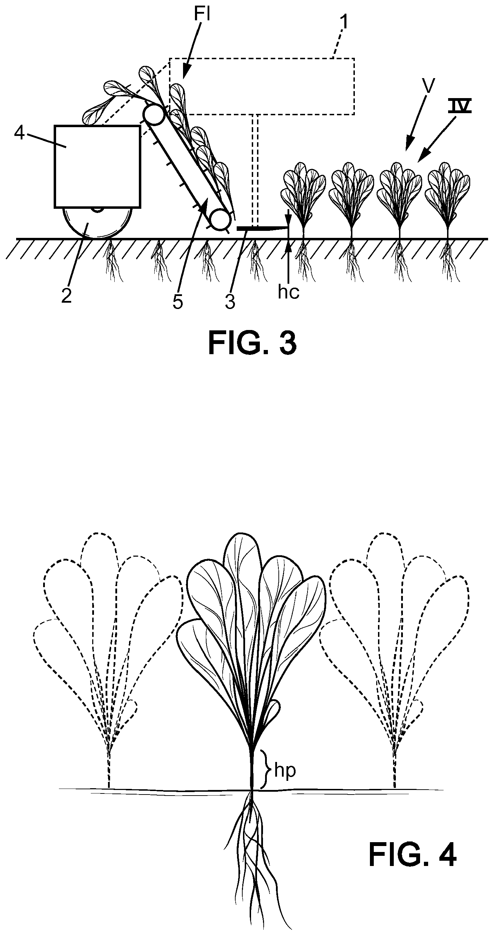

Lors de la récolte selon l'invention, on obtient, tel que représenté à figure 3, non plus des bouquets, mais des feuilles libres Fl, c'est-à-dire des feuilles non liées entre elles à leur base. Ces feuilles libres Fl de Valerienella peuvent être relevées par un convoyeur de la machine et chuter dans une caisse embarquée sur la machine de récolte.

Afin d'obtenir un rendement économiquement acceptable, le procédé de culture de la mâche tel que connu de l'état de la technique est encore profondément modifié pour favoriser ce nouveau mode de récolte de la mâche.

Ainsi, et dans le but de limiter les fausses coupes, à savoir une coupe trop haute, au-dessus du pétiole, résultant en une coupe du limbe des feuilles, ou encore une coupe trop basse ne permettant pas de délier les feuilles de la plante, une ou plusieurs dispositions sont de préférence prises.

Tout d'abord, on favorise la culture des plantes en port dressé et groupé des feuilles, c'est-à-dire se rapprochant le plus possible de la verticale. Cet aspect est particulièrement visible, à titre indicatif, à la vue de la figure 4 qui illustre un port dressé et regroupé des feuilles des plantes d'une culture selon l'invention. Ce port dressé est à comparer à une culture classique de la mâche illustrée à titre d'exemple comparatif à la figure 2.

L'homme du métier comprend que le port dressé de la plante herbacée illustrée à la figure 4 est bien plus favorable à une récolte telle que décrite plus haut, selon l'invention, en ce que les pétioles sont mieux présentés lors de la coupe, et par comparaison à la plante herbacée de la figure 2, selon l'état de la technique, qui provoquera de nombreuses fausses coupes.

Ce résultat est obtenu en favorisant l'étiolement des plantes herbacées, par une augmentation significative de la densité du semi et par rapport à la densité du semi telle qu'elle connue de l'état de la technique de la culture de la mâche. La densité du semi est ainsi, au moins selon un mode de réalisation de l'invention, comprise entre 1100 plantes/m² et 1300 plantes/m² et alors que cette densité est typiquement comprise entre 850 plantes/m² à 1000 plantes/m² selon l'état de la technique de la culture de la mâche.

Cette augmentation de densité du semi force les plantes herbacées à rechercher la lumière vers le haut, et ainsi s'allonger à la verticale, favorisant le regroupement et la présentation des pétioles, eux même regroupés à la verticale. Dans ce même objectif, on évite de préférence les espèces de plantes de genre *Valerianella* à pétiole trop court (de l'ordre de 1 cm ou moins), ce qui demande une précision sur la coupe importante, et on favorise au contraire les espèces de plantes du genre *Valerianella* à pétioles longs qui permettent d'être plus tolérant lors de la récolte, limitant ainsi les fausses coupes.

Dans ce dernier cas, on récolte les plantes du genre *Valerianella* lorsque la longueur des pétioles des plantes est comprise entre 2 cm et 3 cm et on règle la hauteur de la coupe entre 2 cm et 3 cm au-dessus du sol.

Une telle longueur de pétiole, favorable à une récolte selon l'invention nécessite par ailleurs de rallonger le cycle de culture tel que connu de l'état de la technique, qui peut être, à titre indicatif, selon l'invention de 42 à 45 jours en été, et alors que le cycle de culture de mâche selon l'état de la technique est de 32 à 35 jours. En hiver, le cycle de culture des plantes herbacées peut être de 100 jours à 110 jours, alors que le cycle de culture de mâche selon l'état de la technique est de l'ordre de 85 jours.

Un tel rallongement du cycle de culture, en particulier combiné à un étiolement forcé des plantes tel que décrit plus haut, se traduit par une hauteur des bouquets à récolte qui peut être de l'ordre de 10 cm à 12 cm, et alors que la hauteur du bouquet à récolte de la mâche selon l'état de la technique n'excède jamais 7 cm, à la connaissance de la Demanderesse, mais est au contraire et la plupart du temps compris entre 4 cm et 6 cm. L'homme du métier comprend ici, qu'en raison de l'étiolement forcé, affaiblissant les plantes d'une part et le rallongement du cycle de culture, d'autre part, une attention particulière est portée sur la fertilisation et l'irrigation qui doivent être adaptées en conséquence, ainsi que la protection de plantes vis-à-vis des intempéries.

Le mode de récolte selon l'invention implique un moyen de coupe, en particulier une lame de coupe, travaillant hors sol, et contrairement au mode de récolte traditionnel de la mâche pour lequel la lame est enfouie dans le sol, et favorise la présence de corps étrangers parmi la récolte de mâche, et en particulier du sable en quantité.

Selon un aspect de l'invention, et en raison de la faible présence de corps étrangers lors de la récolte, les opérations successives connues de des sablage (par lavage) de la mâche, à proximité du site de récolte, et avant expédition de la mâche à l'usine de conditionnement peuvent être avantageusement supprimées : autrement dit et selon un mode de réalisation, lesdites étapes de culture et de récolte étant mises en oeuvre sur un site de culture, des étapes de lavage et d'emballage étant mises en oeuvre dans une usine de conditionnement, distante du site de culture, on procède à l'expédition des feuilles récoltées depuis le site de culture et jusqu'à ladite usine de conditionnement, lesdites feuilles expédiées n'ayant pas subie d'étape de lavage.

Selon les constatations des inventeurs, les étapes de lavage, avant expédition créent un stress sur les feuilles de mâches, à l'origine de perte ; leur suppression est avantageuse en ce qu'elle permet d'augmenter les rendements de production.

Le procédé peut comprendre les étapes suivantes, après récolte :
- on lave les feuilles libres dans des bacs de lavage,
- on emballe lesdites feuilles libres de genre sous sachet.

L'étape de lavage est de préférence, et tel que décrit plus haut mise en oeuvre directement dans l'usine de conditionnement, et non à proximité du site de culture. En raison du mode de récolte selon l'invention et de la plus faible présence de corps étrangers dans la récolte, l'intensité du lavage dans les bacs est bien inférieure à celle opérée pour la mâche cultivée et récoltée selon l'état de la technique.

De manière classique, les étapes de lavage et/ou rinçage peuvent être mises en oeuvre sur des lignes de productions automatisées, les feuilles libres Fl étant successivement égouttées sur des tapis et afin de retirer l'eau libre.

Les feuilles libres Fl peuvent être conditionnées sous emballage, et de préférence sous sachet, de manière connue, et de préférence sous atmosphère protectrice appauvrie en oxygène et dans le but de limiter les phénomènes d'oxydation. On entend ici par appauvrie en oxygène le fait que la teneur en oxygène du gaz utilisé pour le conditionnement est inférieure à la teneur en oxygène (*i.e* 21%) de l'air.

Les feuilles libres Fl peuvent être conditionnées sous sachet, seules, obtenant ainsi un mono-produit de feuilles libres de plantes de genre *Valerianella,* ou encore en mélange avec une ou plusieurs autres plantes herbacées et/ou avec une ou plusieurs crudités et/ou des herbes aromatiques, obtenant ainsi un multi-produit.

On notera ainsi que les feuilles libres Fl de genre *Valerianella* obtenues selon l'invention sont plus favorables à la réalisation de mélange notamment avec d'autres plantes herbacées et/ou d'autres crudités, et par comparaison à de la mâche sous forme de bouquets tel que récolté selon l'état de la technique.

Selon un mode de réalisation, la ou lesdites autres plantes herbacées en mélange sont choisies parmi :
- Chicurium endivia, en particulier l'endive, la scarole ou la frisée,
- Eruca sativa, encore connue sous le nom de roquette,
- Lactuca, encore connue sous le nom de laitue.

Selon un mode de réalisation, la ou lesdites autres crudités sont choisies parmi :
- la carotte, en particulier la carotte râpée,
- la betterave rouge (la racine).

Selon un mode de réalisation, le mélange peut comprendre une ou plusieurs herbes aromatiques, choisies parmi :
- basilic,
- cerfeuil,
- ciboulette,
- coriande,
- estragon,
- persil,
les jeunes pousses de feuilles de betterave rouge (en anglais « *red chard* »).

De tels sachets de feuilles libres de genre *Valerianella,* mono-produit ou multi-produits trouveront une application particulière comme des produits prêts à l'emploi, c'est-à-dire qui peuvent être consommés sans nécessiter de laver ou de rincer les produits.

Naturellement d'autres modes de réalisations de l'invention auraient pu être envisagés par l'homme du métier sans pour autant sortir de cadre de l'invention tel que défini par les revendications ci-après.

### NOMENCLATURE

1. Châssis (machine de récolte),
2. Rouleau (machine de récolte),
3. Moyen de coupe (machine de récolte),
4. Caisse de stockage (i.e. palox),
5. Convoyeur (machine de récolte),

### Etat de la technique (Figures 1 et 2) :

Bm. Bouquet de mâche

### Invention (Figures 3 et 4) :

V. Plantes herbacées de genre *Valerianella* (i.e mâche),
Fl. Feuilles libres,
hp. Hauteur des pétioles,
hc. Hauteur de coupe.

## Revendications

1. Procédé de culture et de récolte de plantes herbacées de mâche, dans lequel :
- on cultive les plantes herbacées (V) de mâche en planches,
- on récolte les plantes herbacées (V) de manière mécanisée, au moyen d'une machine (M) présentant un moyen de coupe (3) assurant la coupe des plantes lors de l'avance de la machine le long de la planche, et on règle la hauteur de coupe (hc) en dessus du collet des plantes herbacées (V), ledit moyen de coupe (3) travaillant hors sol, et de telle façon à couper les plantes herbacées, au niveau du pétiole, et de manière à obtenir des feuilles libres (Fl), c'est-à-dire, non liées entre elles par leur collet.

2. Procédé selon la revendication 1, dans lequel on récolte les plantes de mâche lorsque la longueur des pétioles des plantes est comprise entre 2 cm et 3 cm.

3. Procédé selon la revendication 1 ou 2, dans lequel on règle la hauteur de la coupe entre 2 cm et 3 cm au-dessus du sol.

4. Procédé selon l'une des revendications 1 à 3 dans lequel on récolte les plantes de mâche lorsque la hauteur des bouquets est comprise entre 10 cm et 12 cm.

5. Procédé selon l'une des revendications 1 à 4 dans lequel la densité du semi de culture est comprise entre 1100 plantes/m² et 1300 plantes/m².

6. Procédé selon l'une des revendications 1 à 5, comprenant les étapes suivantes, après récolte :
- on lave les feuilles libres dans des bacs de lavage,
- on emballe lesdites feuilles libres de mâche sous sachet.

7. Procédé selon la revendication 6, dans lequel on réalise l'étape d'emballage des feuilles libres sous atmosphère protectrice appauvrie en oxygène.

8. Procédé selon la revendication 6 ou 7, dans lequel lesdites étapes de culture et de récolte étant mises en oeuvre sur un site de culture, lesdites étapes de lavage et d'emballage dans une usine de conditionnement, distante du site de culture, et on procède à l'expédition des feuilles récoltées depuis le site de culture et jusqu'à ladite usine de conditionnement, lesdites feuilles expédiées n'ayant pas subie d'étape de lavage.

9. Procédé selon l'une des revendications 6 à 8 dans lequel les feuilles libres Fl sont conditionnées sous sachet, seules, obtenant ainsi un mono-produit de feuilles libres de plantes de mâche.

10. Procédé selon l'une des revendications 6 à 8 dans lequel les feuilles libres sont conditionnées en mélange avec une ou plusieurs autres plantes herbacées et/ou avec une ou plusieurs crudités et/ou des herbes aromatiques, obtenant ainsi un multi-produit.

11. Procédé selon la revendication 10, dans lequel la ou lesdites autres plantes herbacées en mélange sont choisies parmi :
- Chicurium endivia, en particulier l'endive, la scarole ou la frisée,
- Eruca sativa, encore connue sous le nom de roquette,
- Lactuca, encore connue sous le nom de laitue.

12. Procédé selon la revendication 10 ou 11, dans lequel la ou lesdites autres crudités sont choisies parmi :
- la carotte, en particulier la carotte râpée,
- la racine de betterave rouge.

13. Procédé selon l'une quelconque des revendications 10, à 12 dans lequel une ou plusieurs herbes aromatiques, sont choisies parmi :
- basilic,
- cerfeuil,
- ciboulette,
- coriandre,
- estragon,
- persil,
- les jeunes pousses de feuilles de betterave rouge (en anglais « *red chard* »).

## Patentansprüche

1. Verfahren für den Anbau und die Ernte von Feldsalatpflanzen, bei dem:
- die Feldsalatpflanzen (V) auf Platten angebaut werden,
- die Pflanzen (V) mechanisiert mit Hilfe einer Maschine (M) geerntet werden, die ein Schneidmittel (3) aufweist, das das Schneiden der Pflanzen beim Vorschub der Maschine entlang der Platte gewährleistet, und die Schnitthöhe (hc) über dem Kopfansatz der Pflanzen (V) eingestellt wird, wobei das Schneidmittel (3) über dem Boden arbeiten, so dass die Pflanzen im Bereich des Stiels geschnitten und lose Blätter (Fl) erhalten werden, d.h. die nicht durch ihren Kopfansatz miteinander verbunden sind.

2. Verfahren nach Anspruch 1, bei dem die Feldsalatpflanzen geerntet werden, wenn die Länge der Stiele der Pflanzen zwischen 2 cm und 3 cm beträgt.

3. Verfahren nach Anspruch 1 oder 2, bei dem die Höhe des Schnitts zwischen 2 cm und 3 cm über dem Boden eingestellt wird.

4. Verfahren nach einem der Ansprüche 1 bis 3, bei dem die Feldsalatpflanzen geerntet werden, wenn die Höhe der Salatbouquets zwischen 10 cm und 12 cm beträgt.

5. Verfahren nach einem der Ansprüche 1 bis 4, bei dem die Dichte der Aussaat zwischen 1100 Pflanzen/m² und 1300 Pflanzen/m² liegt.

6. Verfahren nach einem der Ansprüche 1 bis 5, umfassend die folgenden Schritte nach der Ernte:
- Waschen der losen Blätter in Waschbehältern,
- Verpacken der losen Feldsalatblätter in einem Säckchen.

7. Verfahren nach Anspruch 6, bei dem der Schritt der Verpackung der losen Blätter unter an Sauerstoff armer Schutzatmosphäre erfolgt.

8. Verfahren nach Anspruch 6 oder 7, bei dem die Schritte des Anbaus und Erntens an einem Anbaustandort eingesetzt werden, wobei die Schritte des Waschens und Verpackens einem Verpackungswerk, das vom Anbaustandort entfernt ist, durchgeführt werden, und bei dem der Versand der am Anbaustandort geernteten Blätter bis zum Verpackungswerk durchgeführt wird, wobei die versandten Blätter keinem Schritt des Waschens unterzogen wurden.

9. Verfahren nach einem der Ansprüche 6 bis 8, bei dem die losen Blätter (Fl) in einem Säckchen allein verpackt werden, wodurch ein Einzelprodukt von losen Blättern von Feldsalatpflanzen erhalten wird.

10. Verfahren nach einem der Ansprüche 6 bis 8, bei dem die losen Blätter im Gemisch mit einer oder mehreren weiteren krautigen Pflanzen und/oder mit einer oder mehreren Rohkostarten und/oder Würzkräutern verpackt werden, wodurch ein Mehrfachprodukt erhalten wird.

11. Verfahren nach Anspruch 10, bei dem die weitere(n) krautigen Pflanzen im Gemisch ausgewählt sind unter:
- Chicurium endivia, insbesondere Chicorée, Endivien- oder Frisée-Salat,
- Eruca sativa, auch bekannt unter dem Namen Rucola,
- Lactuca, auch gekannt unter dem Namen Kopfsalat.

12. Verfahren nach Anspruch 10 oder 11, bei dem die weitere(n) Rohkostart(en) ausgewählt sind unter:
- Karotte, insbesondere geriebene Karotte,
- Rote Beete-Wurzel.

13. Verfahren nach einem der Ansprüche 10 bis 12, bei dem ein oder mehrere Würzkräuter ausgewählt sind unter:
- Basilikum,
- Kerbel,
- Schnittlauch,
- Koriander,
- Estragon,
- Petersilie,
- jungen Trieben von Rote Beete-Blättern (auf Englisch "red chard").

## Claims

1. A method for cultivating and harvesting herbaceous plants of lamb's lettuce, wherein:
- herbaceous plants (V) of lamb's lettuce are cultivated in beds,
- the herbaceous plants (V) are harvested mechanically, by means of a machine (M) having a cutting means (3) for cutting the plants when the lamb's lettuce is fed along the bed, and the cutting height (hc) is adjusted above the collar of the herbaceous plants (V), said cutting means (3) working above ground, and in such a way as to cut the herbaceous plants, at the petiole level, and so as to obtain loose leaves (Fl), that is, not bound to each other by their collar.

2. The method according to Claim 1, wherein lamb's lettuce plants are harvested when the length of the petioles of the plants is between 2 cm and 3 cm.

3. The method according to Claim 1 or 2, wherein the height of the cut is adjusted between 2 cm and 3 cm above the ground.

4. The method according to one of Claims 1 to 3, wherein the lamb's lettuce plants are harvested when the height of the bouquets is between 10 cm and 12 cm.

5. The method according to one of Claims 1 to 4 wherein the density of the growing medium is between 1100 plants/m² and 1300 plants/m².

6. The method according to one of Claims 1 to 5, comprising the following steps, after harvesting:
- the loose leaves are washed in washing bins,
- said loose leaves of lamb's lettuce are packed in a bag.

7. The method according to Claim 6, wherein the step of packing the loose leaves in an oxygen-depleted protective atmosphere is performed.

8. The method according to Claim 6 or 7, wherein said cultivating and harvesting steps are carried out on a cultivation site, said washing and packaging steps in a packaging plant, remote from the cultivation site, and the harvested leaves are shipped from the cultivation site to said packaging plant, said shipped leaves not having undergone a washing step.

9. The method according to one of Claims 6 to 8 wherein the loose leaves Fl are packaged in bags, by themselves, thereby obtaining a mono-product of loose leaves of lamb's lettuce plants.

10. The method according to one of Claims 6 to 8 wherein the loose leaves are packaged in a mixture with one or more other herbaceous plants and/or with one or more raw vegetables and/or aromatic herbs, thereby obtaining a multi-product.

11. The method according to Claim 10, wherein said other herbaceous plant(s) in the mixture are selected from:
- Chicurium endivia, in particular endive, escarole or curly,
- Eruca sativa, also known as rocket,
- Lactuca, also known as lettuce.

12. The method according to Claim 10 or 11, wherein said other raw vegetable(s) are selected from among:
- carrot, in particular grated carrot,
- red beet root.

13. The method according to any of Claims 10 to 12 wherein one or more aromatic herbs are selected from among:
- basil,
- chervil,
- chives,
- coriander,
- tarragon,
- parsley,
- young shoots of red chard.
